# EUROPEAN PATENT APPLICATION

(11) **EP 2 163 284 A1**
(43) Date of publication of application: **17.03.2010**
(21) Application number: 08015456.0
(22) Date of filing: 02.09.2008
(51) Int. Cl.: A63F 13/00, A63F 13/12

(54) **Integration of audio input to a software application**

(71) Applicant: Zero Point Holding A/S, 1101 Copenhagen K (DK)
(72) Inventor: Grønborg, Nicolai F., 4180 Sorø (DK); Jørgensen, Kim Haar, 4420 Regstrup (DK); Kjems, Kristian, 1750 Copenhagen V (DK)
(74) Representative: HOEIBERG A/S

(57) **Abstract**

The present invention concerns a method and a system for integrating voice inputs to a three-dimensional virtual application software, such as a game, on at least one computer during the execution of said virtual application software on said at least one computer, said system comprising:
voice receiving means for receiving a voice input signal real-time sound streaming means, such as an application programming interface (API), receiving at least one external voice input from a user, wherein said voice audio input is encoded to an intermediate output voice sound stream;
three-dimensional software application means comprising means adapted for subjecting said intermediate output voice sound stream data to predetermined software application logic defined in the application software, including identifying the game state of the user in the application software;
output audio data stream generating means for manipulating output voice stream data and any activity related application software generated sounds, wherein the voice stream data with any activity related application selected sound are sampled and manipulated to the intermediate output voice data stream in accordance with the game state by selecting one or more predefined environmental sound effect; and
processing means for routing the output audio data stream to a sound processor card on at least one recipient computer.

Hereby, there is provided a method and a system which integrates voice inputs to a three-dimensional virtual application software, such as a game, wherein the game logic processes all sound inputs, i.e. both the predetermined game state selected sounds and the voice inputs so that the voice input is user-specifically played. Hereby, a user of the game will get an audio experience which is fully integrated with the game state.

## Description

### FIELD OF THE INVENTION

The present invention relates to integration of audio input to a software application enabling at least one user to perform audio communication during the execution of the software application on a computer system.

### BACKGROUND

In gaming and other activities on a computer, communication between remote individuals engaged in a shared activity is becoming increasingly popular. In particular in relation to gaming where individuals connected over the internet or other network communicate with each other while they are playing the game. For participants in multiplayer games, Short Text Messaging (SMS) in a separate mobile telecommunication system, text messaging, such as MSN Messenger^{™}, are used, but presents shortcoming as the messages are not in real-time as the game processes. To overcome this voice communication is greatly expanding and contributes to the enjoyment and social interaction between the players of the game.

Computers comprise processing means required for executing applications, such as game software or the like application including 3-D graphics or virtual worlds as e scene for the application, such as the game. Each player may control their own character in the game, i.e. each player has a digital representation, i.e. an avatar. Most computers also include audio processing modules so they are able to produce sounds and handle voice communications. Personal computers (PCs) enable voice-over-Internet protocol (VoIP) over a network, such as the internet or another data communication network.

Voice communication between the players of the game may be preformed in a VoIP application running on the PC in parallel to the game. Voice processing is typically controlled by the CPU in the PC executing a voice functioning software module, such as a specific application programming interface (API), irrespective of whether the communication is over a network or within a single machine.

As explained in US 2004/0064320 A1, to process voice communication together with executing the game on a game consol may burden the computer processor unit (CPU). In the processor the tasks are prioritized which may cause delays in the execution due to this limited processor capacity. In the art, typically graphics and other primary tasks are given the highest priority so a secondary processor is provided for processing the voice communication. Hereby, voice inputs from a local microphone connected to the game consol of each user is bypassed the first processor and processed by the second processor.

In the software architecture of a game, sound library and the game engine executing the game selects a sound or a sound stream, such as music, from the library in response to a particular activity input from a player or event in the virtual world. These sounds are selected and executed as an integral part of the execution of the game on a game consol or a PC.

As part of the software developer sound design tools, some software applications allow a user to tweak the audio parameters in a game over the network while the game is running. The user hereby gets more control over the outcome of the audio output by being able to alter sound parameters such as volume, frequency, randomization and the like while the game is running. This functionality is advantageous and time saving instead of the usual programming routines, such as testing, quitting, tweaking, recompiling and running the application and iterating such routine until a satisfactory result is achieved. This method can involve many mistakes and take several attempts before the audio output is perfected.

### SUMMARY OF INVENTION

An object of the present invention is to provide a method and system for improved voice communication during the execution of a three-dimensional software application, such as a virtual reality 3D application.

The invention concerns a method for integrating voice inputs to a three-dimensional virtual application software, such as a game, on at least one computer during the execution of said virtual application software on said at least one computer, said method comprising the steps of:
a) receiving at least one external voice input from a user in an application programming interface (API), wherein said voice audio input is encoded to an intermediate output voice sound stream;
b) subjecting said intermediate output voice sound stream data to predetermined software application logic, such as game logic, defined in the application software, including identifying the software application state of the user in the application software;
c) generating an output audio data stream consisting of the manipulate output voice stream data and any activity related application software generated sounds by
   - sampling the voice stream data with any activity related application selected sound;
   - manipulating the intermediate output voice data stream in accordance with the software application location by selecting one or more predefined environmental sound effect; and
d) processing the output audio data stream on the sound processing means, such as a sound processor card, on at least one computer.

By the present invention, there is provided a method and a system which integrates voice inputs to a three-dimensional virtual application software, such as a game, wherein the game logic processes all sound inputs, i.e. both the predetermined game state selected sounds and the voice inputs so that the voice input is user-specifically played. Hereby, a user of the game will get an audio experience which is fully integrated with the game state.

To add to a 3D Sound platform players are enabled to talk and in particular receive dynamically talk from each other with the effects of positional, environmental and game state audio.

Preferably, the external voice input is an analogue voice input captured by a microphone connected to the computer and converted to a digital voice input and routed to the real-time sound streaming means, such as the API. The real-time sound streaming means may further comprise means for generating and formatting an intermediate output voice sound stream into a predetermined data format enabling the computer to receive external voice inputs from external computer devices, i.e. voice communication from other users.

The intermediate output voice sound stream is moreover formatted into a predetermined data format so that standardised API modules (e.g. FMOD Ex 3D Audio API) are enabled to handle the sound stream.

By the manipulation of the intermediate sound data stream includes sampling said voice input with game activity related sounds selected from a sound library source, such as no noise, background noise, door bells, closing of a door, footsteps, shots, etc. Hereby, any user of the game will get an audio experience which is fully integrated with the game state. The selection of one or more predefined environmental sound effect preferably include location specific acoustic characteristics in the three-dimensional software application, such as indoor/outdoor sound characteristics, amount of echo or other room specific sound characteristics, imitation of voice effects such as speech orientation and level in response to location, radio transmitted voice, etc.

In a preferred embodiment, a plurality of users utilising associated remotely located computers participate in the execution of the three-dimensional virtual application software over a data communication network, such local area network (LAN or WLAN) and/or the internet. By the invention it is realised that the method and system may be used in a stand alone configuration but its full potential may be appreciated in a multiple user environment, such as gaming involving a multiple of players or other shared activities over the internet or other communication networks.

In a gaming environment or the like, a range of users ranging between one to all of the users may control an avatar in the three-dimensional virtual application software and that user-specific voice input is associated with said avatar. By the invention voice communication from each user is manipulated in accordance with the game state and the avatars present location and characteristic in the game.

Preferably, a voice over internet protocol (VoIP) system and an application software server, such as a game server, is provided for routing communication between the users. However, other sound processing protocols may also be used without departing from the scope of the invention.

In a multiple user environment, each computer may be provided with a client application software module adapted to interface with the application software server and the VoIP system for communicating with the three-dimensional application software.

By the term three-dimensional application software is meant any three-dimensional virtual world application software, including but not restricted to games. Of other types of three-dimensional virtual world applications could be architectural construction applications, off-site tutorial applications, etc. It is realised that a method and system according to the present invention could be applied to any such virtual world computerised applications.

In the following, the invention is explained with reference to some currently preferred embodiments and with reference to the accompanying drawings, in which:
- Fig. 1: is a functional diagram showing a first embodiment of the invention;
- Fig. 2: is a functional diagram showing a second embodiment of the invention;
- Fig. 3: is a functional diagram showing a third embodiment of the invention; and
- Fig. 4: is a functional block diagram of a system according to the invention.

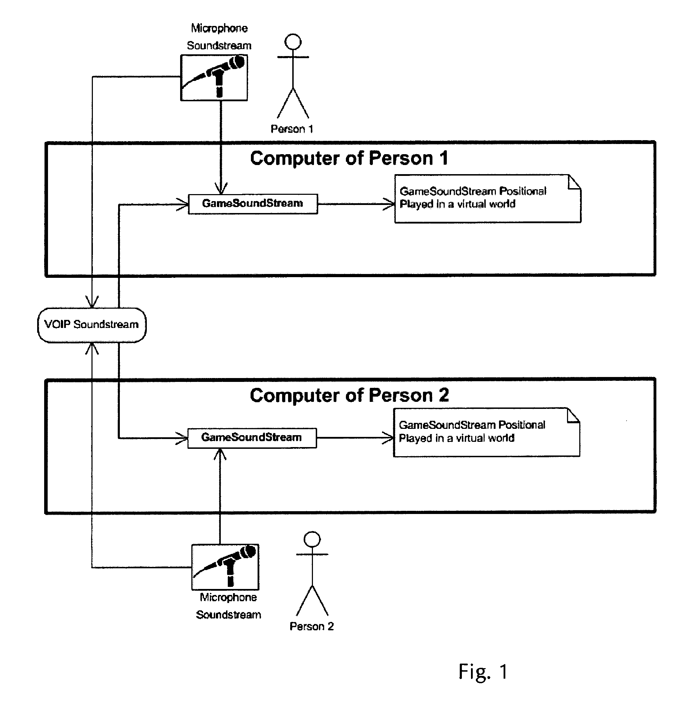

With reference to fig. 1, the basic concept is illustrated. A user, person 1, talks into a microphone whilst play a game, i.e. running an interactive software application including a virtual world, on his computer. The user, person 1, thereby controls a virtual representation, an avatar, in the application. The microphone picks up an audio input. The GameSoundStream captures the audio input and translates such as reformats it into an audio stream (GameSoundStream). Thereby The audio stream is translated into a format that the virtual world can play.

The audio stream is then positioned according to the location of the virtual representation of the user, audio post-processes are added according to the context, and played in the virtual space defined in the software application being run on the computer.

Since more users (in figure 1 represented by "Person 2") can inhabit the same virtual space in a multiple user environment, such as in a gaming environment a multiple player environment, more users may be enabled not only to see the avatar of person 1, but also to hear the positioned audio stream of this user (person 1).

As shown in fig. 1, all users (Person 1, Person 2) control a computer including the features enabling the activities described above.

This network application embodiment of a system according to the invention comprises the following activities:
1. A user (Person 1, person 2) talks into a microphone
2. The audio input is transmitted to another user (Person 1, person 2) e.g. via voice over IP (VoIP);
3. Game Sound Streaming means take the voice over IP input and turns it into a GameSoundStream, or an audio stream;
4. The audio stream is translated into a format that the virtual world can play;
5. The audio stream is then positioned according to the location of the virtual representation of the user, audio post-processes are added according to the context, and played in the virtual space, thereby making it audible to other users in the virtual space.

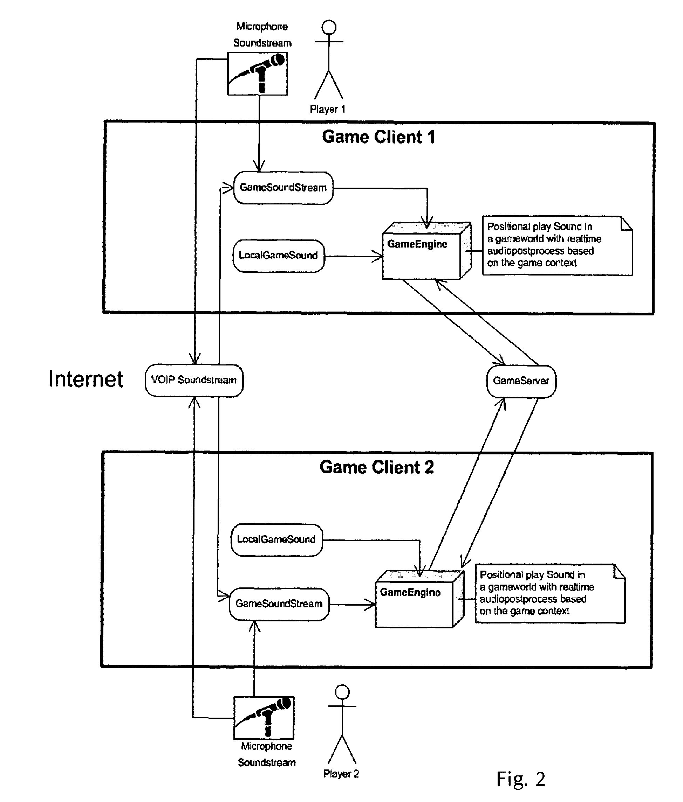

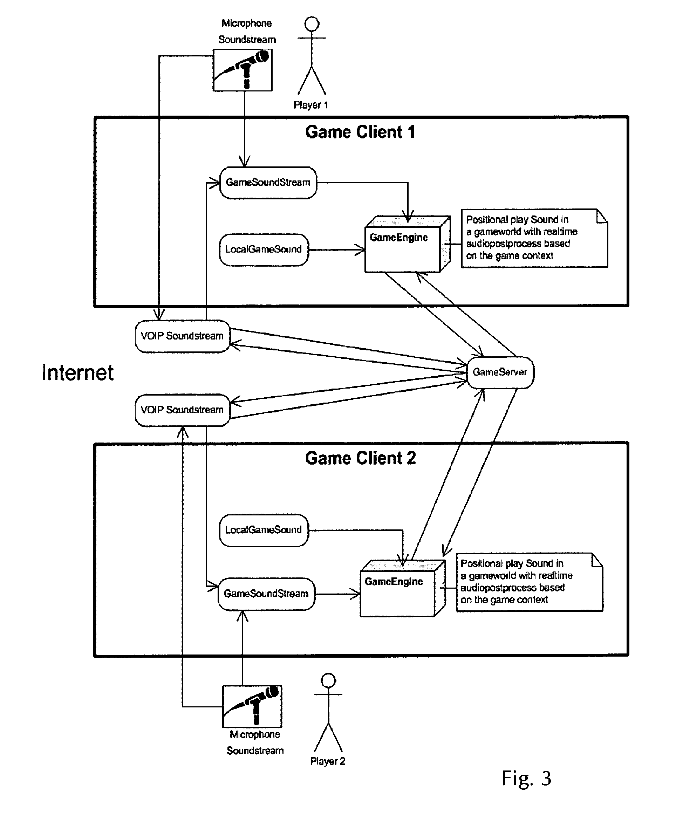

With reference to figures 2 and 3, an embodiment is schematically illustrated where a multiple of users at remote locations are playing a game over the internet. The users are connected over the internet to a game server and a VoIP application. In performing the gaming activity, an audio stream is captured in the game sound stream of game client 1 and imported into the game engine. The game sound stream is mixed with the local game sound and subjecting this to the game logic thereby tweaking the sampled game sound and audio stream in accordance with a realtime audio post process based on the game context. Hereby, the sound stream from game client 1 transmitted over the VoIP to the one or more other users/gamers, e.g. game client 2, is received with a game logic context tweaking providing this receiving user with a realtime game logical virtual reality representation of user 1. Similarly, player 2 may have similar means available on the game client 2 so that player 1 is able to receive similar avatar realtime sound streams subjected to the game logic and thereby represents a game logical, realtime audio stream.

As shown in fig. 3, the VoIP may be integrated and the audio streams may be routed and controlled via the game server or as shown in fig. 2, routed and controlled via the game clients on the individual computers/ game clients in the multiple user environment.

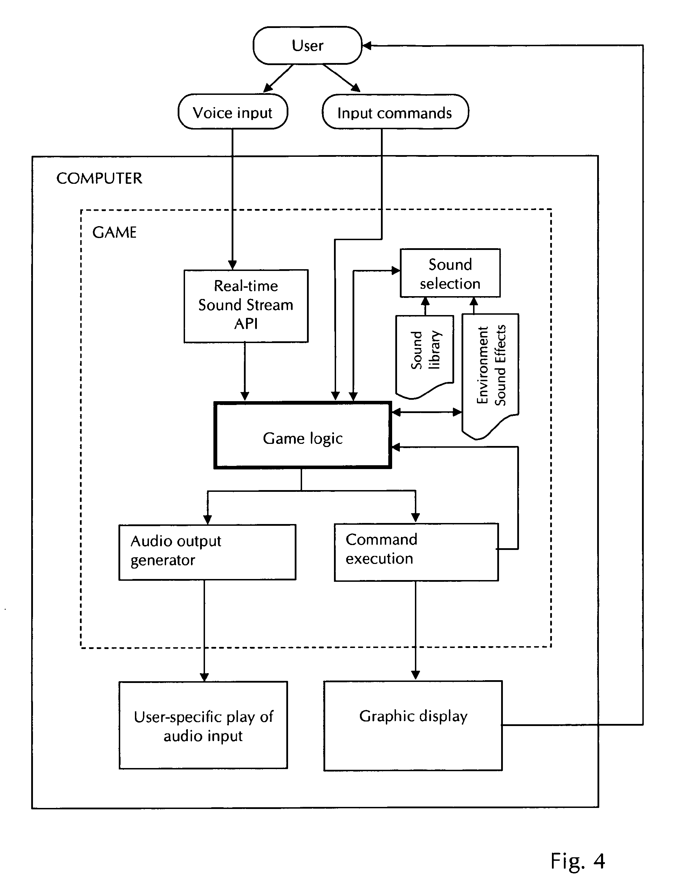

With reference to figure 4, a block diagram of the preferred functions of the invention is shown schematically. In the figure, the functions of integrating a voice input and the input commands of a user are shown how such two input types are integrated and correlated under subjection to the game logic of the software appliance being performed in the computer environment.

By the invention, a system which may be referred to as a Real Time Voice Porting system, offers the following advantages:
■ Bringing social game experiences quantum leaps forward by integrating inter-player communication in the game as opposed to inter-player communication running parallel with the game.
■ Immersing the player even more in the game experience by playing her voice in the game with the environments affecting it.
■ Having the player interacting with the artificial intelligence using her voice only by letting the Al react to the sounds uttered by the player.

A Real Time Voice Porting system may preferably comprise the following features substituting or in addition to the features shown in fig. 4:
- Play microphone input in game
- Microphone input affects Artificial Intelligence
- Sound effected by environment reverb when helmet open
- Input Volume affects radius
- Radio static filter
- Environment occlusion
- Helmet microphone transports close radius sounds (e.g. gunfire, creature attack)
- Position based volume
- Interference on radio communications.

Above there is described some preferred embodiments of the present invention. However, it is realised that many other embodiments may be provided without departing from the scope of the invention such as described by the accompanying claims.

## Claims

1. A method for integrating voice inputs to a three-dimensional virtual application software, such as a game, on at least one computer during the execution of said virtual application software on said at least one computer, said method comprising the steps of:
a) receiving at least one external voice input from a user in an application programming interface (API), wherein said voice audio input is encoded to an intermediate output voice sound stream;
b) subjecting said intermediate output voice sound stream data to predetermined software application logic, such as game logic, defined in the application software, including identifying the software application state of the user in the application software;
c) generating an output audio data stream consisting of the manipulate output voice stream data and any activity related application software generated sounds by
- sampling the voice stream data with any activity related application selected sound;
- manipulating the intermediate output voice data stream in accordance with the software application location by selecting one or more predefined environmental sound effect; and
d) processing the output audio data stream on the sound processor card on at least one computer.

2. A method according to claim 1, whereby the external voice input is an analogue voice input captured by a microphone connected to the computer and converted to a digital voice input and routed to the API.

3. A method according to claim 1 or 2, including the step of formatting said intermediate output voice sound stream into a predetermined data format.

4. A method according to any of claims 1 to 3, whereby the manipulation of the intermediate sound data stream includes a step of sampling said voice input with game activity related sounds selected from a sound library source (no noise, background noise, door bells, closing of a door, footsteps, shots, etc.).

5. A method according to any of the preceding claims, whereby the selection of one or more predefined environmental sound effect include location specific acoustic characteristics in the three-dimensional software application, such as indoor/outdoor sound characteristics, amount of echo or other room specific sound characteristics, imitation of voice effects such as speech orientation and level in response to location, radio transmitted voice, etc.

6. A method according to any of the preceding claims, wherein a plurality of users utilising associated remotely located computers participate in the execution of the three-dimensional virtual application software over a data communication network, such local area network (LAN or WLAN) and/or the internet.

7. A method according to claim 6, whereby a range of users ranging between one to all of the users control an avatar in the three-dimensional virtual application software and that user-specific voice input is associated with said avatar.

8. A method according to claim 6 or 7, whereby a voice over internet protocol (VoIP) system and an application software server, such as a game server, is provided for routing communication between the users.

9. A method according to claim 8, whereby each user computer is provided with a client application software module adapted to interface with the application software server and the VoIP system for communicating with the three-dimensional application software.

10. A computer readable memory medium having computer executable machine instructions stored thereon for carrying out the steps of any of claims 1 to 9.

11. A system for integrating voice inputs to a three-dimensional virtual application software, such as a game, on at least one computer during the execution of said virtual application software on said at least one computer, said system comprising:
voice receiving means for receiving a voice input signal
real-time sound streaming means, such as an application programming interface (API), receiving at least one external voice input from a user, wherein said voice audio input is encoded to an intermediate output voice sound stream;
three-dimensional software application means comprising means adapted for subjecting said intermediate output voice sound stream data to predetermined software application logic defined in the application software, including identifying the game state of the user in the application software;
output audio data stream generating means for manipulating output voice stream data and any activity related application software generated sounds, wherein the voice stream data with any activity related application selected sound are sampled and manipulated to the intermediate output voice data stream in accordance with the game state by selecting one or more predefined environmental sound effect; and
processing means for routing the output audio data stream to a sound processor card on at least one recipient computer.

12. A system according to claim 11, wherein the voice receiving means comprises an analogue voice input device, in particular a microphone for capturing external voice input, and means for converting the analogue voice input to a digital voice input and routing said voice input to the real-time sound streaming means, said real-time sound streaming means further comprising means for generating and formatting an intermediate output voice sound stream into a predetermined data format.

13. A system according to claim 12, wherein the voice receiving means further comprises digital audio input means for receiving voice communication from external computer devices.

14. A system according to any of claims 11 to 13, wherein the three-dimensional software application means further comprises means for the manipulation of the intermediate sound data stream including means for sampling said voice input with game activity related sounds selected from a sound library source.

15. A system according to claim 14, wherein the means for the manipulation comprises means for selecting one or more predefined environmental sound effect include game state specific acoustic characteristics in the three-dimensional software application, such as indoor/outdoor sound characteristics, amount of echo or other room specific sound characteristics, imitation of voice effects such as speech orientation and level in response to location, radio transmitted voice, etc.

16. A system according to any of claims 11 to 13, wherein a plurality of remotely located computers (PCs) are included in the execution of the three-dimensional virtual application software over a data communication network, such local area network (LAN or WLAN) and/or the internet.

17. A system according to claim 16, wherein a range of users of personal computers (PCs) in the network ranging between one to all of the PCs each control an avatar in the three-dimensional virtual application software and that user-specific voice input is associated with said avatar via the one or more PCs.

18. A system according to claim 16 or 17, wherein a voice over internet protocol (VoIP) system and an application software server, such as a game server, is provided for routing communication between the users.

19. A system according to any of claims 16 to 18, wherein each personal computer is provided with a client application software module adapted to interface with the application software server and the VoIP system for communicating with the three-dimensional application software.

20. A system according to any of claims 11 to 19, wherein three-dimensional virtual application software being a computer game and the three-dimensional software application means is a game engine.

21. A system according to any of claims 11 to 20, wherein the recipient computer may be one or more other computers in a network and/or the only computer on which the voice input is received.
